# EUROPEAN PATENT APPLICATION

(11) **EP 2 607 937 A1**
(43) Date of publication of application: **26.06.2013**
(21) Application number: 11833797.1
(22) Date of filing: 17.09.2011
(51) Int. Cl.: G02B 6/44

(54) **PREFABRICATED DISTRIBUTION FIBER OPTIC CABLE AND METHOD FOR FABRICATING SAME**

(30) Priority: 22.10.2010 CN 201010530400
(71) Applicant: Huawei Technologies Co., Ltd., Shenzhen, Guangdong 518129 (CN)
(72) Inventor: WU, Wenxin, Shenzhen Guangdong 518129 (CN); WANG, Bo, Shenzhen Guangdong 518129 (CN); DENG, Jichang, Shenzhen Guangdong 518129 (CN); LIU, Jiangmin, Shenzhen Guangdong 518129 (CN)
(74) Representative: Thun, Clemens
(86) International application number: PCT/CN2011/079790
(87) International publication number: WO 2012/051891

(57) **Abstract**

The present invention relates to the field of optical communication technologies, and discloses a prefabricated distribution optical cable and a method for fabricating the same, so as to avoid damage to the straight-through fibers in the process of prefabricating the branch fibers in the factory. The prefabricated distribution optical cable includes: a distribution optical cable, including at least one optical cable subunit, where the number of fibers of each optical cable subunit is equal to the number of fibers needing to branch off; a branch optical cable, being an optical cable subunit of a specific length branching off from the distribution optical cable; a branch protecting unit, configured to fasten a branch point of the distribution optical cable and the branch optical cable and provide sealing protection for the branch point; and a connector unit, configured to terminate the branch optical cable. When fabricating the prefabricated distribution optical cable, the distribution optical cable is cut at the branch point in an encircling manner, the optical subunit needing to branch off is extracted, fastening the branch point and providing sealing protection for the branch point, and the extracted optical cable subunit is terminated. The embodiments of the present invention are applicable to passive optical network technologies.

## Description

### FIELD OF THE INVENTION

The present invention relates to the field of fiber communication technologies, and in particular, to a prefabricated distribution optical cable, and a method for fabricating the same.

### BACKGROUND OF THE INVENTION

Currently, when implementing splicing of a distribution optical cable straight or branching of a distribution optical cable, an optical cable division box or a connecting box is generally used. At a user access point, an optical cable is led into the box and fastened. In the box, the distribution optical cable is spliced with a distribution optical cable that needs to be connected with a drop cable on the site, and the remaining fibers of the distribution optical cable extend to the next branch point or access point. An optical cable division box or connecting box is usually big in size, and needs to be mounted in a specific place. Moreover, the optical cable needs to be spliced on the site in the construction process, the spliced fiber needs to be spooled and sealed, and the box needs to be installed, which makes maintenance and expansion rather inconvenient.

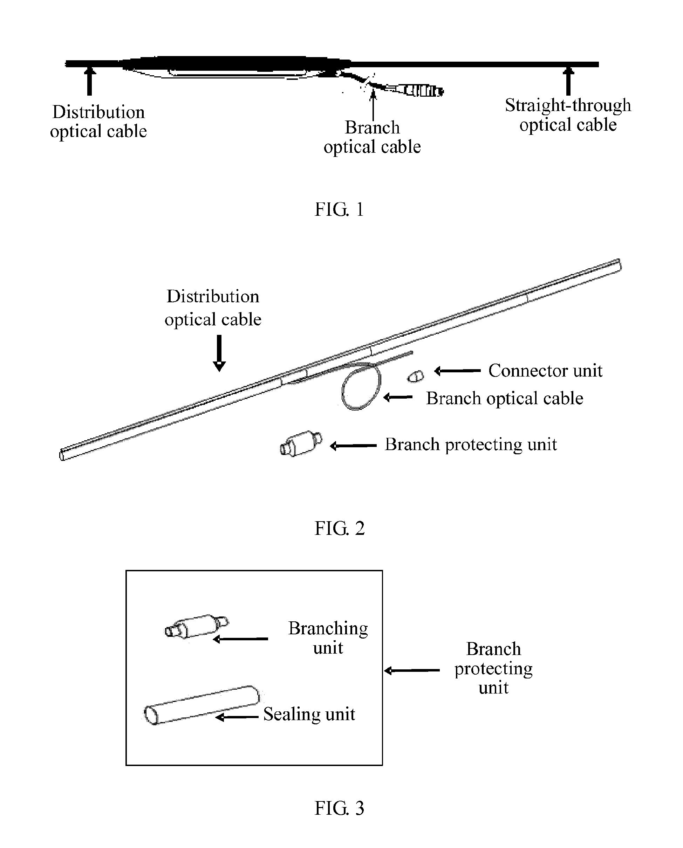

As shown in FIG. 1, to reduce work inconvenience caused by the use of the optical cable division box or connecting box on the site, the prior art provides a solution to branching off a pre-connected distribution optical cable. In the solution, the distribution optical cable at the branch point is wrapped with a flexible sleeve to form an "optical cable cavity" like micro connecting box in the process of prefabricating the branch fiber in the factory; in the cavity, a part of fibers in the optical cable subunit in the distribution optical cable are cut off, and undergo multi-fiber splicing and protection with the tail cable; meanwhile, the fibers that require splicing straight in the distribution optical cable go on being spliced straight, thereby implementing the branching function and the straight splicing function in the cavity.

In the implementation of the present invention, the inventor finds that in the solution to branch a pre-connected distribution optical cable in the prior art, when a part of fibers in the optical cable subunit in the distribution optical cable are cut off and spliced, other fibers in the same optical cable subunit go on being spliced straight, which tends to damage the straight-through fibers.

### SUMMARY OF THE INVENTION

Embodiments of the present invention provide a prefabricated distribution optical cable and a method for fabricating the same, so as to avoid damage to the straight-through fibers in the process of prefabricating the branch fibers in the factory.

The embodiments of the present invention adopt the following technical solutions:

A prefabricated distribution optical cable includes:
a distribution optical cable, including at least one optical cable subunit, where the optical cable subunit includes the number of fibers of each optical cable subunit is equal to the number of fibers needing to branch off;
a branch optical cable, being an optical cable subunit of a specific length branching off from the distribution optical cable;
a branch protecting unit, configured to fasten a branch point of the distribution optical cable and the branch optical cable and provide sealing protection for the branch point; and
a connector unit, configured to terminate the branch optical cable, where the number of fibers of the terminated cable is equal to the number of fibers in the branch optical cable.

A method for fabricating the foregoing prefabricated distribution optical cable includes:
cutting off an optical cable subunit needing to branch off, where the number of fibers in the optical cable subunit is equal to the number of fibers needing to branch off;
stripping a section of an outer protection layer off the distribution optical cable at a branch point and extracting the cut optical cable subunit;
fastening the branch point and provide sealing protection for the branch point; and
terminating the extracted optical cable subunit, where the number of fibers of the terminated cable is equal to the number of fibers in the branch optical cable.

Further,

A prefabricated distribution optical cable includes:
a distribution optical cable, including at least one optical cable subunit, where the number of fibers of each optical cable subunit is equal to the number of fibers needing to branch off;
a branch optical cable, being an optical cable subunit of a specific length branching off from the distribution optical cable;
a branch protecting unit, distributed along the length of the distribution optical cable, and configured to fasten a branch point of the distribution optical cable and the branch optical cable and provide sealing protection for the branch point;
a connector unit, configured to terminate the branch optical cable, where the number of fibers of the terminated cable is equal to the number of fibers in the branch optical cable; and
a breakout optical cable, connected with the terminated breakout optical cable straight, and configured to connect a drop cable.

A method for fabricating the foregoing prefabricated distribution optical cable includes:
cutting off an optical cable subunit needing to branch off, where the number of fibers in the optical cable subunit is equal to the number of fibers needing to branch off;
stripping a section of an outer protection layer off the distribution optical cable at a branch point and extracting the cut optical cable subunit;
fastening the branch point and provide sealing protection for the branch point;
terminating the extracted optical cable subunit, where the number of fibers of the terminated cable is equal to the number of fibers in the branch optical cable; and
connecting the terminated optical cable subunit with a breakout optical cable.

As revealed in the foregoing technical solutions of the present invention, the prefabricated distribution optical cable is fabricated by wrapping an optical cable subunit in the distribution optical cable, and the number of fibers of the wrapped optical cable subunit is equal to the number of fibers needing to branch off at each branch point. In this way, when prefabricating the branch fibers in the factory, the corresponding optical cable subunit can branch off directly, and other optical cable subunits keeps straight-through. Therefore, the branching optical cable subunit is independent of the straight-through optical cable subunit in the distribution optical cable, thereby avoiding damage to the straight-through fibers in the process of prefabricating the branch fibers in the factory.

### BRIEF DESCRIPTION OF THE DRAWINGS

To make the technical solutions of the embodiments of the present invention clearer, the accompanying drawings used in description of the embodiments of the present invention are illustrated in brief below.
FIG. 1 is a schematic diagram of a method of branching a pre-connected distribution optical cable in the prior art;
FIG. 2 is a schematic structural diagram of a prefabricated distribution optical cable according to an embodiment of the present invention;
FIG. 3 is a structural diagram of a branch protecting unit according to an embodiment of the present invention;
FIG. 4 is an overall structural diagram of a prefabricated distribution optical cable according to an embodiment of the present invention;
FIG. 5 is a schematic structural diagram of a branch optical cable according to an embodiment of the present invention;
FIG. 6 is a schematic flowchart of a method for fabricating a prefabricated distribution optical cable according to an embodiment of the present invention; and
FIG. 7 is an application scenario of connecting a prefabricated distribution optical cable with a drop cable according to an embodiment of the present invention.

### DETAILED DESCRIPTION OF THE EMBODIMENTS

The technical solutions of the present invention are described clearly and completely below with reference to the accompanying drawings.

As shown in FIG. 2, an embodiment of the present invention provides a prefabricated distribution optical cable, including:
a distribution optical cable, including at least one optical cable subunit, where the number of fibers of each optical cable subunit is equal to the number of fibers needing to branch off;
a branch optical cable, being an optical cable subunit of a specific length branching off from the distribution optical cable;
a branch protecting unit, configured to fasten a branch point of the distribution optical cable and the branch optical cable and provide sealing protection for the branch point; and
a connector unit, configured to terminate the branch optical cable.

For example, the distribution optical cable needs to branch off at 3 user access points according to a deployment plan, and the numbers of fibers to branch off to the 3 user access points are 4, 8, and 6, respectively. Therefore, such a prefabricated distribution optical cable may be made in the factory: 3 (or more) optical cable subunits are wrapped in the distribution optical cable, and the numbers of fibers in the 3 optical cable subunits are 4, 8, and 6, respectively. The corresponding optical cable subunit branches off at the planned branch point, and other optical cable subunits in the distribution optical cable remain straight-through. Afterward, the branch point is fastened and sealing protection is provided by using a branch protecting unit, and the branch optical cable is terminated by using a connector unit. Therefore, the branch optical cable subunit is independent of the straight-through optical cable subunit, thereby avoiding damage to the straight-through fibers in the process of prefabricating the branch fibers in the factory.

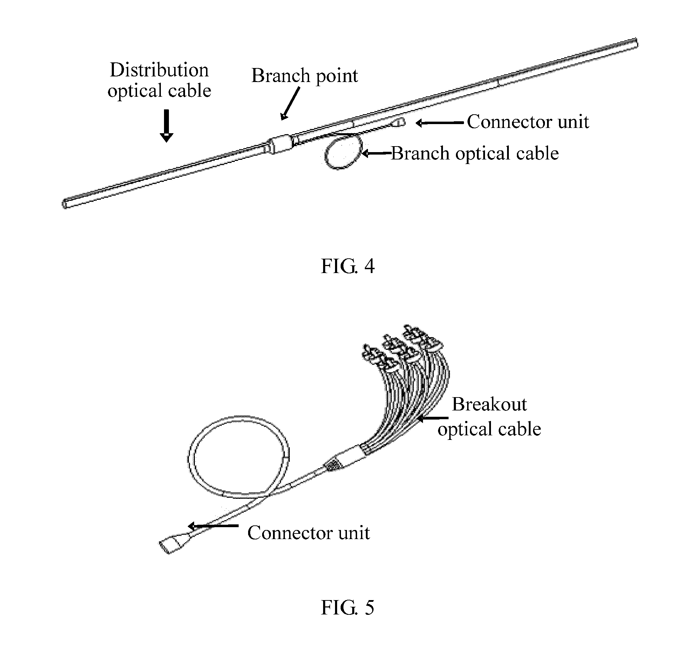

The branch protecting unit is flexible and pressure-resistant. Specifically, as shown in FIG. 3 and FIG. 4, the branch protecting unit may include:
a branching unit, connected at a branch point where the branch optical cable branches off from the distribution optical cable, in an encircling manner, and configured to fasten the branch point; and
a sealing unit, wrapped on the branching unit to provide sealing protection for the branch point. Specifically, the sealing unit may be a heat shrink tubing or cold shrink tubing.

The connector unit for terminating the branch optical cable may be a single-pin or multi-pin connector. The number of pins of the connector is equal to the number of fibers in the branch optical cable.

As shown in FIG. 5, the prefabricated distribution optical cable in this embodiment may further include a breakout optical cable. One end of the breakout optical cable is prefabricated into a single-pin or multi-pin receptacle that matches the connector unit, thereby facilitating connection with the terminated optical cable subunit. The other end of the breakout optical cable is prefabricated into a single-pin connector that is easily connectable with the drop cable.

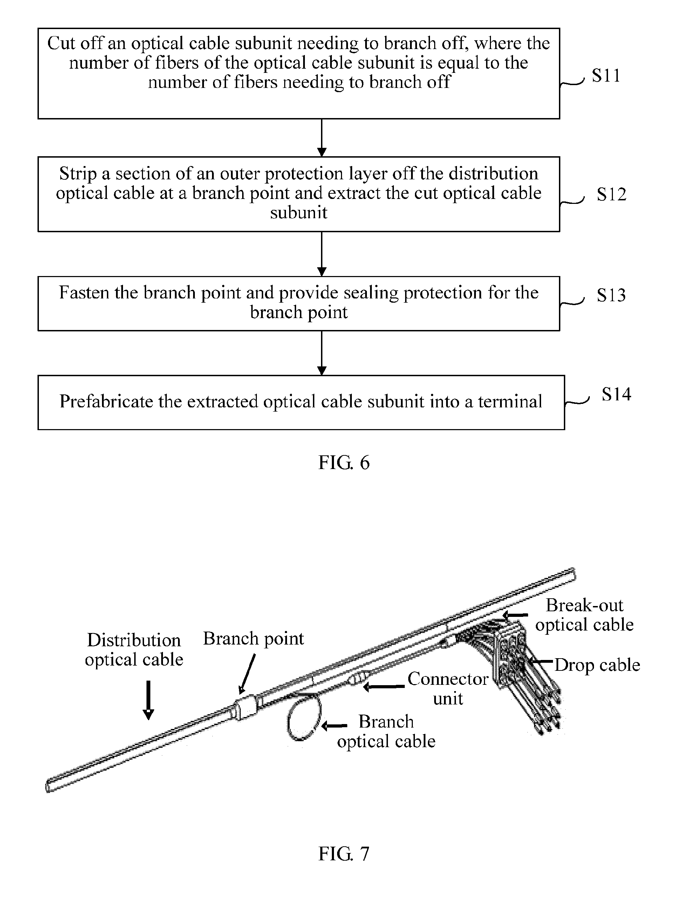

FIG. 6 is a schematic flowchart of a method for fabricating the foregoing prefabricated distribution optical cable. A method for fabricating a prefabricated distribution optical cable according to an embodiment of the present invention includes the following steps.

S11. Cut off an optical cable subunit needing to branch off, where the number of fibers in the optical cable subunit is equal to the number of fibers needing to branch off.

S12. Strip a section of an outer protection layer off the distribution optical cable at a branch point and extract the cut optical cable subunit.

S 13. Fasten the branch point and provide sealing protection for the branch point.

S 14. Terminate the extracted optical cable subunit.

Before fabricating the prefabricated distribution optical cable, it is necessary to determine the branch points of the optical cable and the number of fibers needing to branch off at each branch point. When prefabricating the distribution optical cable, for ease of stripping off a specific length of outer protection layer of the optical cable subunit, cut off the optical cable subunit needing to branch off at a specific distance before each branch point according to the survey performed before the construction begins, where the branch points are distributed along the length of the distribution optical cable, and the distance depends on the length of the optical cable subunit needing to strip at each branch point; cut the distribution optical cable at the branch point in an encircling manner, strip a section of outer protection layer off the distribution optical cable, extract the cut optical cable subunit, fasten the branch point and provide sealing protection for the branch point, and prefabricate the extracted optical cable subunit into a terminal.

Specifically, as shown in FIG. 3 and FIG. 4, the branching unit is connected in an encircling manner at the branch point to fasten the branch point; the branching unit is wrapped with a sealing unit, where the sealing unit may be a heat shrink tubing or a cold shrink tubing for providing sealing protection for the branch point. Afterward, the extracted optical cable subunit is prefabricated into a single-pin connector or multi-pin connector. The number of pins of the connector is equal to the number of fibers in the optical cable subunit.

Because the optical cable subunits in the distribution optical cable are independent of each other, only the corresponding optical cable subunit needs to be extracted when branching, which prevents impact on other optical cable subunits in the same distribution optical cable, thereby avoiding damage to the straight-through fibers in other optical cable subunits in the process of prefabricating the branch fibers in the factory. Besides, the branch point of the optical cable is protected by both the branching unit and the sealing unit, thereby further avoiding damage to other optical cable subunits in the process of prefabricating the branch fibers in the factory. Moreover, the branch protection structure is easy to operate.

Further, the method for fabricating a prefabricated distribution optical cable provided by this embodiment may further include:
connecting the terminated optical cable subunit with a breakout optical cable.

One end of the breakout optical cable may be prefabricated into a single-pin or multi-pin receptacle that matches the terminated optical cable subunit, thereby facilitating connection with the terminated optical cable subunit. The other end of the breakout optical cable is prefabricated into a single-pin connector that is easily connectable with the drop cable.

FIG. 7 is an application scenario of connecting a prefabricated distribution optical cable with a drop cable. At the user access point, the breakout optical cable is connected to a respective user terminal through a single-fiber drop cable.

Through the breakout optical cable, the branch optical cable can be connected to the drop cable conveniently, thereby connecting the fibers into the user's premises quickly. Moreover, in the method for fabricating the prefabricated distribution optical cable in the present invention, the optical cable does not need to be spliced in the process of prefabricating the branch fibers in the factory, thereby reducing link attenuation, cutting back costs, and facilitating subsequent maintenance and expansion.

The above descriptions are merely preferred embodiments of the present invention, but not intended to limit the protection scope of the present invention. Any variations or replacement that can be easily derived by persons skilled in the art without departing from the spirit of the present invention shall fall within the protection scope of the present invention. Therefore, the protection scope of the present invention is subj ect to the appended claims.

## Claims

1. A prefabricated distribution optical cable, comprising:
a distribution optical cable, comprising at least one optical cable subunit, wherein the number of fibers of each optical cable subunit is equal to the number of fibers needing to branch off;
a branch optical cable, being an optical cable subunit of a specific length branching off from the distribution optical cable;
a branch protecting unit, configured to fasten a branch point of the distribution optical cable and the branch optical cable and provide sealing protection for the branch point; and
a connector unit, configured to terminate the branch optical cable, wherein the number of fibers of the terminated cable is equal to the number of fibers in the branch optical cable.

2. The prefabricated distribution optical cable according to claim 1, wherein the branch protecting unit comprises:
a branching unit, connected at a branch point where the branch optical cable branches off from the distribution optical cable in an encircling manner, and configured to fasten the branch point; and
a sealing unit, configured to wrap the branching unit to provide sealing protection for the branch point.

3. The prefabricated distribution optical cable according to claim 1, wherein:
the connector unit is specifically a single-pin or multi-pin connector, and the number of pins of the connector is equal to the number of fibers in the branch optical cable.

4. The prefabricated distribution optical cable according to claim 1, further comprising:
a breakout optical cable, wherein one end of the breakout optical cable is connected with the terminated branch optical cable through a matched connector unit, and the other end is prefabricated into a terminal for connecting with a drop cable.

5. A prefabricated distribution optical cable, comprising:
a distribution optical cable, comprising at least one optical cable subunit, wherein the number of fibers of each optical cable subunit is equal to the number of fibers needing to branch off;
a branch optical cable, being an optical cable subunit of a specific length branching off from the distribution optical cable;
a branch protecting unit, distributed along the length of the distribution optical cable, and configured to fasten a branch point of the distribution optical cable and the branch optical cable and provide sealing protection for the branch point;
a connector unit, configured to terminate the branch optical cable, wherein the number of fiber of the terminated cable is equal to the number of fibers in the branch optical cable; and
a breakout optical cable, connected with the terminated branch optical cable, and configured to connect a drop cable.

6. A method for fabricating a prefabricated distribution optical cable, comprising:
cutting off an optical cable subunit needing to branch off, wherein the number of fibers of the optical cable subunit is equal to the number of fibers needing to branch off;
stripping a section of an outer protection layer off the distribution optical cable at a branch point and extracting the cut optical cable subunit;
fastening the branch point and providing sealing protection for the branch point; and
terminating the extracted optical cable subunit, wherein the number of fibers of the terminated cable is equal to the number of fibers in the extracted optical cable subunit.

7. The method for fabricating a prefabricated distribution optical cable according to claim 6, wherein the fastening the branch point and providing sealing protection for the branch point specifically comprises:
connecting a branching unit at the branch point to fasten the branch point in an encircling manner; and
wrapping the branching unit with a sealing unit to provide sealing protection for the branch point.

8. The method for fabricating a prefabricated distribution optical cable according to claim 6, wherein the prefabricating the extracted optical cable subunit into a terminal comprises:
prefabricating the extracted optical cable subunit into a single-pin connector or multi-pin connector, wherein the number of pins of the connector is equal to the number of fibers in the optical cable subunit.

9. The method for fabricating a prefabricated distribution optical cable according to claim 6, further comprising:
connecting one end of a breakout optical cable with the terminated optical cable subunit through a matched connector unit, and prefabricating the other end into a terminal for connecting with a drop cable.

10. A method for fabricating a prefabricated distribution optical cable, comprising:
cutting off an optical cable subunit needing to branch off, wherein the number of fibers of the optical cable subunit is equal to the number of fibers needing to branch off;
stripping a section of an outer protection layer off the distribution optical cable at a branch point and extracting the cut optical cable subunit;
fastening the branch point and providing sealing protection for the branch point; and
terminating the extracted optical cable subunit, wherein the number of fibers of the terminated cable is equal to the number of fibers in the extracted optical cable subunit; and
connecting the terminated optical cable subunit with a breakout optical cable.
